Europäisches Patentamt

**European Patent Office**

Office européen des brevets

(19)

(11) Veröffentlichungsnummer: **0 109 680**
**B1**

(12)

# EUROPÄISCHE PATENTSCHRIFT

(45) Veröffentlichungstag der Patentschrift:
19.03.86

(51) Int. Cl.⁴: **H 04 B 3/14**

(21) Anmeldenummer: 83111561.3

(22) Anmeldetag: 18.11.83

(54) Als Bode-Entzerrer ausgebildeter einstellbarer Dämpfungentzerrer.

(30) Priorität: 22.11.82 DE 3243111

(43) Veröffentlichungstag der Anmeldung:
30.05.84 Patentblatt 84/22

(45) Bekanntmachung des Hinweises auf die Patenterteilung:
19.03.86 Patentblatt 86/12

(84) Benannte Vertragsstaaten:
DE FR IT

(56) Entgegenhaltungen:
IEEE INTERNATIONAL MICROWAVE SYMPOSIUM
DIGEST, San Diego, (USA), 21.-23. Juni 1977, Seiten
308-311, New York, USA, D.J. MELLOR: "On the design
of matched equalizers of prescribed gain versus
frequency profiles"
PATENTS ABSTRACTS OF JAPAN, Band 3, Nr.
129(E-147), 26. Oktober 1979, Seite 165E147
PATENTS ABSTRACTS OF JAPAN, Band 5, Nr.
181(E-83)(853), 20. November 1981
TECHNICAL DIGEST. WESTERN ELECTRIC, Nr. 70, April
1983, Seiten 17,18, New York, USA, H. MIEDEMA: "A
low-cost parabolic gain equalizer"

(73) Patentinhaber: Siemens Aktiengesellschaft, Berlin und
München Wittelsbacherplatz 2, D-8000 München 2 (DE)

(72) Erfinder: Bücherl, Erwin, Dipl.-Ing., Baumeisterstrasse 8,
D-8000 München 70 (DE)
Erfinder: Ensslin, Gerhard, Dipl.-Ing., Schleissheimer
Strasse 124, D-8000 München 40 (DE)

## Beschreibung

Die Erfindung betrifft einen als Bode Entzerrer ausgebildeten einstellbaren Dämpfungsentzerrer.

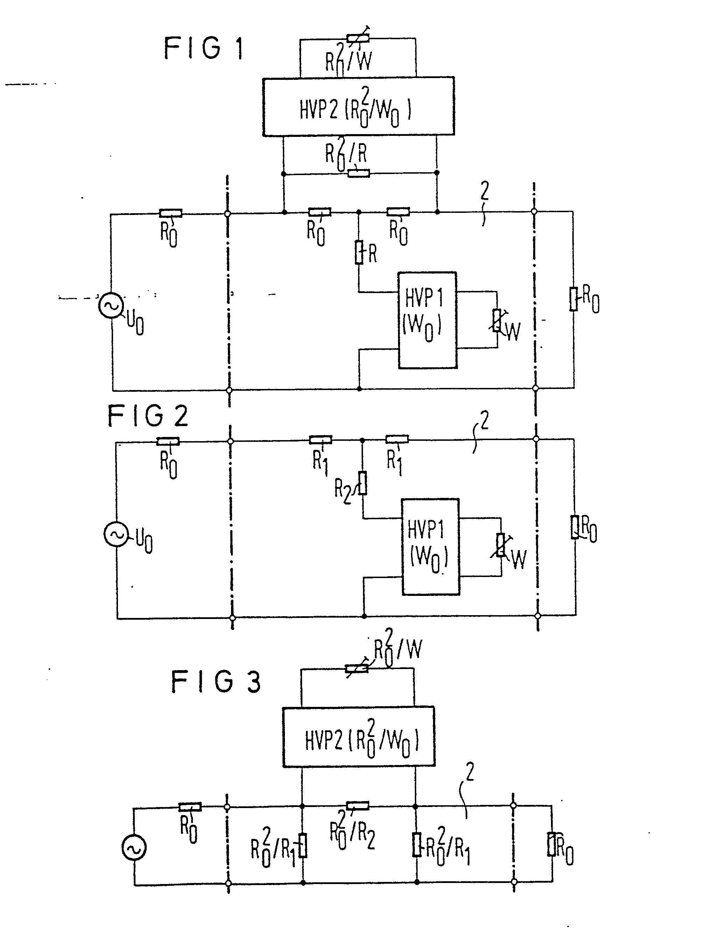

Einstellbare Dämpfungsentzerrer sind beispielsweise in dem Aufsatz von P. Hermanutz "Ein variabler Entzerrer", AEÜ, Band 26 (1972) Heft 2, Seiten 99 bis 104, beschrieben und auch verhältnismäßig detailliert mathematisch behandelt. Anhand der Figuren 1 bis 3 wird dieser bekannte Stand der Technik nachstehend noch im einzelnen erläutert, so daß zunächst nur kurz folgendes ausgeführt wird.

In diesen sogenannten Bode-Entzerrern werden häufig Allpaßglieder als Hilfsvierpole verwendet. Diese enthalten Schaltelemente, insbesondere Spulen, je nach Aufgabenstellung auch gekoppelte, deren Induktivitätswerte mit steigender Betriebsfrequenz immer kleiner werden. Oberhalb von etwa 100 MHz sind dann solche Entzerrer mit diskreten Elementen meist nicht mehr realisierbar, darüber hinaus zeigt sich, daß vorgegebene Frequenzgänge nur mit verhältnismäßig komplizierten Hilfsvierpolen erreicht werden können.

Der Erfindung liegt die Aufgabe zugrunde, einen nach Art eines Bode Entzerrers ausgebildeten einstellbaren Entzerrer anzugeben, bei dem der Hilfsvierpol verhältnis-mäßig einfach ausgebildet werden kann und der auch bei relativ hohen Frequenzen funktionsfähig ist.

Diese Aufgabe wird für einen einleitend angegebenen Dämpfungsentzerrer in der Weise gelöst, daß der Hilfsvierpol durch eine Leitung reellen, frequenzunabhängigen Wellenwiderstandes gebildet ist.

Insbesondere zeigt sich dabei, daß sich auf diese Weise ideale Kosinusentzerrer realisieren lassen.

Vorteilhafte Ausgestaltungen sind in den Unteransprüchen angegeben.

Anhand von Ausführungsbeispielen wird nachstehend die Erfindung noch näher erläutert. Es zeigen in der Zeichnung

Fig. 1 einen vollständigen, bekannten Bode Entzerrer,

Fig. 2 einen sogenannten vereinfachten, bekannten Bode Entzerrer mit dem Hilfsvierpol im Querzweig,

Fig. 3 einen vereinfachten, bekannten Bode Entzerrer mit dem Hilfsvierpol im Längszweig,

Fig. 4 einen vereinfachten Bode Entzerrer nach der Erfindung mit einer Leitung als Hilfsvierpol,

Fig. 5 einen mit konzentrierten Schaltelementen aufgebauten vereinfachten Bode Entzerrer, der die Eigenschaften des Entzerrers nach den Figuren 4 bzw. 7 hat,

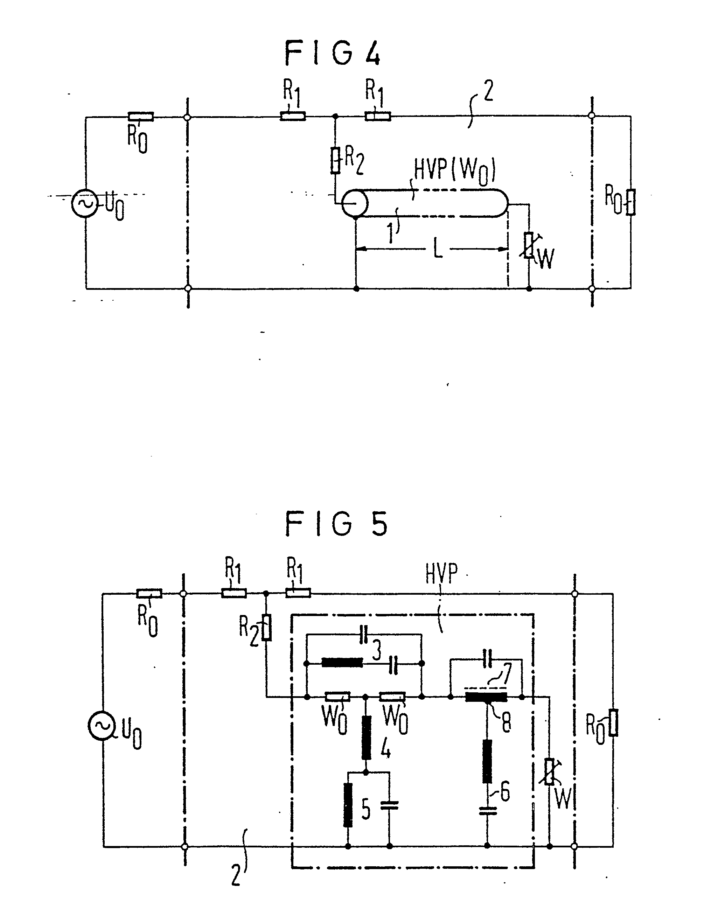

Eig. 6 den linearen Frequenzgang eines Bode Entzerrers nach Fig. 4 mit $\frac{\lambda}{8}$ Leitungslänge ($L \approx$ 18,5 cm) bei $f_m$ = 140 MHz,

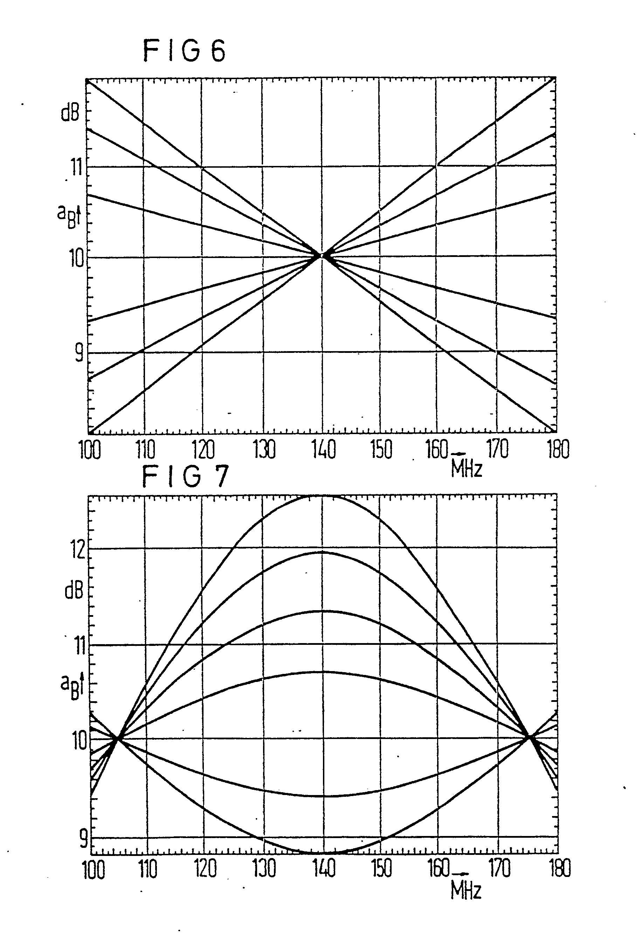

Fig. 7 einen sogenannten parabolischen Frequenzgang eines Bode Entzerrers nach Fig. 4 mit $\lambda/2$ Leitungslänge ($L \approx$ 74 cm) bei $f_m$ = 140 MHz.

In Fig. 1 ist ein sogenannter vollständiger Bode Entzerrer dargestellt, der dort insgesamt mit der Bezugsziffer 2 versehen ist. Diesem Entzerrer vorgeschaltet ist eine Spannungsquelle $U_o$ mit dem Innenwiderstand $R_o$, der Abschlußwiderstand ist ebenfalls mit $R_o$ bezeichnet. Der Entzerrer selbst besteht aus einem Dämpfungsnetzwerk in der Form eines überbrückten T-Gliedes mit den Widerständen $R_o$ in den Längszweigen und einem Widerstand $R_o{}^2/R$ im Überbrückungszweig. Im Querzweig liegt ein Widerstand $R$, dem in bekannter Weise ein Hilfsvierpol HVP 1 mit dem Wellenwiderstand $W_o$ nachgeschaltet ist.

Der Hilfsvierpol HVP1 selbst ist mit einem einstellbaren Widerstand W abgeschlossen. Parallel zum Überbrückungszweig liegt der Hilfsvierpol HVP 2, der den Wellenwiderstand $R_o{}^2/W_o$ hat und der mit dem Widerstand $R_o{}^2/W$ abgeschlossen ist.

In den folgenden Figuren sind diese Bezugszeichen an sich unmittelbar übernommen und es sind wirkungsgleiche Elemente mit den gleichen Bezugsziffern wie in Fig. 1 bezeichnet.

In Fig. 2 ist ein vereinfachter Bode Entzerrer dargestellt, der nur im Querzweig einen Hilfsvierpol verwendet. Auch solche Schaltungen sind an sich bekannt. Im Entzerrer 2 wird das Widerstands-T-Glied durch die Widerstände $R_1$ im Längszweig und den Widerstand $R_2$ im Querzweig gebildet. Diesem Widerstand $R_2$ ist dann der Hilfsvierpol HVP 1 nachgeschaltet, der dort mit dem einstellbaren Widerstand W abgeschlossen ist.

Eine weitere, an sich ebenfalls bekannte Vereinfachungsform zeigt Fig. 3. Dort wird der Entzerrer 2 aus einem sogenannten Widerstands π-Glied gebildet, in dessen Längszweig der Widerstand $R_o{}^2 / R_2$ und in dessen Querzweigen die Widerstände $R_o{}^2/R_1$ liegen. Der Hilfsvierpol HVP 2 hat den Wellenwiderstand $R_o{}^2/W_o$ und ist mit dem einstellbaren Widerstand $R_o{}^2/W$ abgeschlossen.

Ausgehend von dem vereinfachten Bode Entzerrer gemäß Fig. 2 wird nun in Fig. 4 die erfindungsgemäße Schaltung gezeigt. In den Längszweigen des Entzerrers 2 liegen somit wieder die Widerstände $R_1$ und in ihrem Querzweig der Widerstand $R_2$, dem ein Hilfsvierpol HVP nachgeschaltet ist. Dieser Hilfsvierpol besteht aus einer Leitung 1 mit dem Wellenwiderstand $W_o$ und der Länge L, die mit dem einstellbaren Widerstand W abgeschlossen ist. Einzelheiten werden später noch besprochen. Es sei noch darauf hingewiesen, daß z.B. die Leitung 1 aus mehreren Leitungen zusammengeschaltet werden kann, die für sich in passender Weise so bemessen sein müssen, daß die geforderte Gesamtwirkung für den Hilfsvierpol HVP erreicht wird. Auch ist es möglich, mehrere Beitungsstücke gleichen oder unterschiedlichen Wellenwiderstandes sowie gleicher oder unterschiedlicher elektrischer Länge nur eingangsseitig parallel oder in Serie zu schalten und diese Leitungen ausgangsseitig mit gleichen oder unterschiedlichen ohmschen Widerständen abzuschließen.

In Fig. 5 ist gezeigt. welche komplizierte Schaltung verwendet werden müßte, wenn der in Fig. 4 dargestellte Entzerrer mit seinem Hilfsvierpol HVP durch ein Netzwerk aus konzentrierten Schaltelementen nachgebildet werden müßte. In diesem Fall müßte also der Hilfsvierpol aus den Widerständen $W_0$ in den Längszweigen eines überbrückten T-Gliedes bestehen, denen eine Spule 4 und ein Parallel-Resonanzkreis 5 im Querzweig nachgeschaltet sind; der Überbrückungszweig 3 würde aus einem versteilerten Parallel-Resonanzkreis bestehen, der aus der Parallel-Schaltung eines Kondensators und eines Serienresonanzkreises besteht. Nachgeschaltet ist ein weiterer Schaltungsabschnitt, der einen Serienresonanzkreis 6 im Querzweig der Schaltung hat, der wiederum an der Mittelanzapfung 8 eines Parallelresonanzkreises 7 liegt, wenn dabei davon ausgegangen wird, daß - wie gestrichelt kenntlich gemacht - der Parallelresonanzkreis 7 eine gekoppelte Spule enthält.

In der Figurenkurzbeschreibung ist bereits darauf hingewiesen, daß dieser Entzerrer nach Fig. 5 bei geeigneter Bemessung der Schaltelemente das gleiche Dämpfungsverhalten hat, wie es in Fig. 7 für den Entzerrer nach Fig. 5 dargestellt ist.

Die Fig. 6 bzw. 7 zeigen einen linearen bzw. einen parabolischen Dämpfungsverlauf eines realisierten Beispiels. Dabei hat bei Fig. 6 die Leitung 1 eine Leitungslänge von $\lambda/S$, d.h. also im Ausführungsbeispiel $L \approx 18,5$ cm bei einer Mittenfrequenz von 140 MHz und einem gesamten zu entzerrenden Übertragungsfrequenzbereich zwischen 105 und 75 MHz. Auf der Ordinate ist die Dämpfung $a_B$ in dB aufgetragen.

Entsprechend gilt dies auch für Fig. 7, bei der die Länge L der Leitung 1 zu $\lambda/2$ gewählt ist, wodurch ein parabolischer Frequenzgang der Dämpfung entsteht. Im Ausführungsbeispiel bedeutet dies, daß bei einer Mittenfrequenz von $f_m = 140$ MHz die Leitungslänge L etwa 74 cm betragen muß.

Zu ergänzenden Erläuterungen sei nachstehend noch auf folgendes hingewiesen.

Der Bode Entzerrer nach Fig. 1 ist ein bekanntes und in seiner vereinfachten Form (Fig. 2, 3) oft verwendetes Netzwerk zur Entzerrung von frequenzabhängigen Amplitudenverläufen. In erster Näherung läßt sich sein Dämpfungsverlauf durch die Beziehung

$$a_B = a_0 \pm 2 \, H_0 \, \mathcal{R} \, e^{-2a_H(\omega)} \cos 2b_H(\omega)$$

darstellen. Die vorstehende Gleichung ist in Formel 11 des einleitend genannten Aufsatzes zu finden und ist hier geringfügig modifiziert.

Dabei sind $a_H(\omega)$ und $b_H(\omega)$ die (Wellen-) Dämpfung und (Wellen-) Phase des Hilfsvierpols (HVP).

$$\mathcal{R} = \frac{R-W_0}{R+W}$$

ist der, Reflexionsfaktor des Abschlußwiderstandes R des Hilfsvierpoles gegenüber dem Wellenwiderstand W des Hilfsvierpols, die Hubkonstante $H_0$ ist eine Funktion der Grunddämpfung $a_0$ des Bodeentzerrers, sie hängt von der gewählten Struktur ab. Der Frequenzgang des Bode-Entzerrers wird durch die Dämpfung $a_H(\omega)$ und die Phase $b_H(\omega)$ des Hilfsvierpols bestimmt, dessen Wellenwiderstand $W_0$ konstant sein muß. Zur Realisierung des Hilfsvierpols kommen also überbrückte T-Glieder mit zueinander dualen Längs- und Querimpedanzen in Frage, d.h. Dämpfungs (-fest-) Entzerrer und Allpässe.

Es ist möglich, den Hilfsvierpol nur als Allpaß auszu-. führen. Dann ist der Entzerrerfrequenzgang proportional zu cos $2b_H$. Allpässe für diesen Zweck sind oft nicht kopplungsfrei realisierbar und enthalten daher in den gekoppelten Spulen kritische Bauelemente, die besonders bei höheren Frequenzen sehr häufig nicht mehr herstellbar sind.

Wenn, wie oft gefordert, die Entzerrerfrequenzgänge arithmetisch symmetrisch zu einer Mittenfrequenz linear oder parabolisch verlaufen sollen, kann dies durch entsprechende Teile der Kosinusfunktion erreicht werden, wenn die Phase des Hilfsvierpols linear verläuft. Diese lineare Phase hat eine Leitung. Es ist also denkbar, in solchen Fällen als Hilfsvierpol ein Leitungsstück mit entsprechender, aus den Forderungen zu ermittelnder Länge zu verwenden. Für lineare Verläufe sind Leitungsstücke der Länge $(1+n)\frac{\lambda}{8}$ entsprechend $b_H = (1+n)\,45_0$ mit $n = 0,2,4,...$, für parabolische Verläufe sind Leitungsstücke der Länge $m\frac{\lambda}{4}$ entsprechend $b_H = m,90°$ mit $m = 1,2,3,...$ erforderlich. Daneben ergibt sich auch die Möglichkeit zur Erzeugung von Amplitudengängen mit periodischem cos-Verlauf durch Benutzung einer entsprechend größeren Leitungslänge im Hilfsvierpol. Diese Leitungsstücke müssen den für Bode-Entzerrer üblichen Dimensionierungsvorschriften (z.B. nach der eingangs angegebenen Literaturstelle) berechneten Wellenwiderstand besitzen, dann überträgt die Leitung die ausgangsseitige Fehlanpassung in gleicher Weise wie ein konzentriert aufgebauter Hilfsvierpol auf den Eingang.

Je nach Betriebsfrequenz kann die Kabellänge auch ziemlich groß werden. In so einem Fall muß die Kabeldämpfung $a_k$ proportional $\sqrt{f}$ unter Umständen berücksichtigt werden. Dies ist leicht möglich durch einen dem Kabel vor- oder nachgeschalteten, konzentriert aufgebauten Dämpfungsentzerrer mit geeignetem Frequenzgang.

Falls Entzerrerfrequenzgänge verlangt werden, die von den genannten einfachen, arithmetisch symmetrischen abweichen, können auch diese durch Kettenschaltung eines überbrückten T-Gliedes zum Leitungsstück erreicht werden.

Käufliche Kabel sind nur in wenigen Wellenwiderstandswerten erhältlich (z.B. 50 Ω, 75 Ω, 150 Ω). Dem kann dadurch Rechnung getragen werden, daß die Grunddämpfung $a_0$ des Bode-Entzerrers dementsprechend festgelegt wird, da der Wellenwiderstand $W_0$ des HVP nur von $a_0$ abhängt. Nicht standardisierte Zwischenwerte des Kabelwellenwiderstandes können gegebenenfalls durch Parallel- oder Reihenschaltung von zwei Kabeln gleichen oder unterschiedlichen Wellenwiderstandes hergestellt werden, wobei natürlich die Phasengänge der beiden Kabelstücke gleich sein müssen. Durch Parallelschalten zweier 75-Ω-Kabel erhält man also einen Wellenwiderstand von 37,5 Ω, durch Parallelschalten eines 75-Ω-Kabels und eines 50-Ω-Kabels einen Wellenwiderstand von 130,0 Ω usw.

Bei dem normalerweise nicht verwendeten vollständigen Bode-Entzerrer sind zwei Kabel nötig für Längs- und Querzweig, deren Wellenwiderstände dual zueinander sein müssen. Diese Bedingung kann z.B. für $W_0 = Z_0$ erfüllt werden, wenn $Z_0$ der Wellenwiderstand des Bode-Entzerrers ist.

Ein Schaltungsbeispiel für den vereinfachten Bode-Entzerrer mit Leitungsstück als Hilfsvierpol zeigt Fig. 4.

Die Werte der Widerstände $R_1$, $R_2$, W sowie des Wellenwiderstandes $W_0$ des Leitungsstücks ergeben sich in bekannter Weise aus den Anforderungen an Grunddämpfung und Entzerrungsvariation. Die Länge L des Leitungsstücks bestimmt gemäß den obigen Ausführungen den frequenzabhängigen Verlauf der Entzerrercharakteristik.

Die Figuren 6 und 7 zeigen Ergebnisse einer analysierten Schaltung mit der Mittelfrequenz $f_m$ = 140 MHz. Die Leitungslänge L beträgt dabei 1/8 Wellenlänge für den Fall linearen Amplitudengangs und 1/2 Wellenlänge für parabolischen Gang. In Fig. 5 ist zum Vergleich der erforderliche Aufwand einer mit konzentrierten Elementen aufgebauten Schaltung zur Erzeugung eines parabolischen Dämpfungsganges dargestellt.

Bei dem vorstehend beschriebenen Entzerrer wird von dem Gedanken ausgegangen, daß zur Herstellung eines bestimmten Phasengangs nicht unbedingt Allpässe erforderlich sind. Die für den Hilfsvierpol notwendige Eigenschaft konstanten Wellenwiderstandes kann auch durch Beitungsstücke erreicht werden, der erforderliche Phasengang wird durch die Länge der Leitung bestimmt.

Damit ersetzt also ein Leitungsstück ein wesentlich aufwendigeres LC-Netzwerk, das darüber hinaus meist mit gekoppelten Spulen realisiert werden müßte.

Die Einschränkung, daß damit nur Kosinus-Verläufe der Dämpfung realisiert werden können, ist nicht von großer Bedeutung, da einmal die häufigsten Forderungen linearen oder parabolischen Dämpfungsfrequenzgang verlangen und zum anderen durch Zuschaltung von geeigneten überbrückten T-Gliedern mit konzentrierten Elementen, aber ohne gekoppelte Spulen, leicht andere Frequenzgänge erzielbar sind.

Die beschriebene Schaltung läßt sich sowohl für den vereinfachten als auch den vollständigen Bode-Entzerrer anwenden, in letzterem Fall ist jeweils ein Leitungsstück im Längszweig und eines im Querzweig mit dazu dualem Wellenwiderstand nötig.

## Patentansprüche

1. Als Bode-Entzerrer ausgebildeter einstellbarer Dämpfungsentzerrer, bestehend aus einem Widerstandsnetzwerk und einem frequenzgang-formenden Hilfsvierpol (HVP), dadurch gekennzeichnet, daß der Hilfsvierpol (HVP) durch eine Leitung (1) reellen, frequenzunabhängigen Wellenwiderstandes gebildet ist.

2. Bode-Entzerrer nach Anspruch 1, dadurch gekennzeichnet, daß die Länge der Leitung (1) den Wert $(1+n) \lambda/8$ hat, wobei n = 0,2,4... und $\lambda$ die zur Mittenfrequenz eines vorgebbaren, zu entzerrenden Frequenzbereichs gehörende Wellenlänge ist.

3. Bode-Entzerrer nach Anspruch 1, dadurch gekennzeichnet, daß die Länge der Leitung (1) den Wert m. $\lambda/4$ hat, wobei m = 1,2,3... und $\lambda$ die zur Mittenfrequenz eines vorgebbaren, zu entzerrenden Frequenzbereichs gehörende Wellenlänge ist.

4. Bode-Entzerrer nach einem der vorhergehenden Ansprüche dadurch gekennzeichnet, daß die Leitung (1) aus der ein- und ausgangsseitigen Paralleloder Berienschaltung mehrer Beitungen gleichen oder unterschiedlichen Wellenwiderstandes mit gleicher, elektrischer Länge besteht.

5. Bode-Entzerrer nach einem der vorhergehenden Ansprüche dadurch gekennzeichnet, daß der Leitung (1) Hilfsvierpole (HVP) reellen konstanten Wellenwiderstandes vor- oder nachgeschaltet sind.

6. Bode-Entzerrer nach einem der vorhergehenden Ansprüche dadurch gekennzeichnet, daß mehrere Leitungsstücke gleichen oder unterschiedlichen Wellenwiderstandes sowie gleicher oder unterschiedlicher elektrischer Länge nur eingangsseitig parallel oder in Serie geschaltet sind und ausgangsseitig mit gleichen oder unterschiedlichen ohmschen Widerständen abgeschlossen sind.

## Claims

1. An adjustable attenuation equaliser designed as a Bode equaliser, which consists of a resistor network and an auxiliary four-pole (HVP) forming the frequency curve, characterised in that the auxiliary four-pole (HVP) is formed by a real impendance line (1) of frequency-independent characteristic.

2. A Bode equaliser as claimed in Claim 1, characterised in that the length of the line (1) has the value $(1+n) \lambda/8$, where $n = 0,2,4...$ and $\lambda$ constitutes the wavelength assigned to the centre frequency of a predeterminable frequency range which is to be equalised.

3. A Sode equaliser as claimed in Claim 1, characterised in that the length of the line (1) has the value $m. \lambda/4$, where $m = 1,2,3...$ and $\lambda$ is the wavelength assigned to the centre frequency of a predeterminable frequency range which is to be equalised.

4. A Bode equaliser as claimed in one of the preceding Claims, characterised in that the line (1) consists of the input-end and output-end parallel or series connection of a plurality of lines of the same or different characteristic impedance with the same electric length.

5. A Bode equaliser as claimed in one of the preceding Claims, characterised in that the line (1) is preceded or followed by auxiliary four-Poles (HVP) of constant real characteristic impedance.

6. A Bode equaliser as claimed in one of the preceding Claims, characterised in that a plurality of line section of the same or different characteristic impedance and of the same or different electric length are only connected in parallel or in series at the input end and are terminated by identical or different ohmic resistances at the output end.

## Revendications

1. Correcteur d'affaiblissement réglable réalisé sous la forme d'un correcteur de Bode et constitué par un réseau de résistances et par un quadripôle auxiliaire (HVP) formant la réponse en fréquence, caractérisé par le fait que le quadripôle auxiliaire (HVP) est formé par une ligne (1) possédant une impédance caractéristique réelle indépendante de la fréquence.

2. Correcteur de Bode suivant la revendication 1, caractérisé par le fait que la longueur de la ligne (1) a pour valeur $(1+n) \lambda/8$, avec $n = 0,2,4,...$ et $\lambda$ étant la longueur d'onde associée à la fréquence centrale d'une plage de fréquences pouvant être prédéterminée et dans laquelle on doit effectuer la correction de distorsions.

3. Correcteur de Bode suivant la revendication 1, caractérisé par le fait que la longueur de la ligne (1) possède pour valeur $m. \lambda/4$, avec $m = 1,2,3...$ et $\lambda$ étant la longueur d'onde associée à la fréquence centrale d'une plage de fréquences pouvant être prédéterminée et dans laquelle on doit effectuer la correction de distorsions.

4. Correcteur de Bode suivant l'une des revendications précédentes, caractérisé par le fait que la ligne (1) est constituée par le montage parallèle ou série, côté entrée et côté sortie, de plusieurs lignes possédant des impédances caractéristiques identiques ou différentes et possédant la même longueur électrique.

5. Correcteur de Bode suivant l'une des revendications précédentes, caractérisé par le fait que des quadri-pôles auxiliaires (HVP) possédant une impédance caractéristique constante réelle sont branchés en amont ou en aval de la ligne (1).

6. Correcteur de Bode suivant l'une des revendications précédentes, caractérisé par le fait que plusieurs éléments de ligne possédant des impédances caractéristiques identiques ou différentes ainsi que des longueurs électriques identiques ou différentes sont branchés en parallèle ou en série, uniquement du côté entrée et sont terminés, du côté sortie, par des résistances ohmiques identiques ou différentes.

FIG 1

FIG 2

FIG 3

FIG 4

FIG 5

FIG 6

FIG 7